# EUROPEAN PATENT SPECIFICATION

(11) **EP 0 803 716 B1**
(45) Date of publication and mention of the grant of the patent: **03.07.2002**
(21) Application number: 97500067.0
(22) Date of filing: 17.04.1997
(51) Int. Cl.: G01G 11/04, G01G 19/03, G01G 11/00

(54) **Machine for the dynamic weighing of fruit**
Vorrichtung zum dynamischen Wägen von Früchten
Dispositif pour peser dynamiquement des fruits

(30) Priority: 23.04.1996 ES 9600913
(43) Date of publication of application: 29.10.1997
(73) Proprietor: Roda Packing, S.A., 46600 Alzira (Valencia) (ES)
(72) Inventor: Perez Galan, Miguel Angel, 46600 Alzira (Valencia) (ES)
(74) Representative: Duran Moya, Carlos

(56) References cited:
- EP-A- 0 283 388
- EP-A- 0 568 763
- US-A- 2 710 690
- US-A- 4 254 877

## Description

### DESCRIPTIVE MEMORANDUM

The present invention relates to a machine intended to effect the dynamic-type weighing of fruit and similar horticultural and fruit-cultivation elements.

D1 refers to an automatic tube weighing and classifying machine which permits the automatic weighing of glass tubes which are picked one by one and transported by conveying chains provided with lugs, one for each tube. After weighing, the tubes are removed from the supporting lugs by means of a combination of cam arms (111) which are held away from the operating cams by means of cam latches which are released by solenoids to swing fingers which throw tubes off the supporting lugs and to guiding rails.

D2 discloses an apparatus for the automatic selection and calibration of fruits and similar which operates on individual pieces of fruit, comprising motorized conveyors and trays with a central cavity for the piece of fruit to be weighed which is submitted to an associated weighing unit.

The machine forming the object of the present invention is characterised in that it effects the weighing of the loaded fruit containers without stopping the conveyer chains, for which purpose it has a zone in the path of the chains conveying the said containers in which the said chains are supported on a loading platform associated with a loading cell which has piezoelectric functioning, that is to say which is capable of transforming the force exerted on the loading cell by the weight of the articles to be weighed, into electrical voltage pulses which, suitably amplified and processed, will indicate the weight of the articles in a very precise manner.

The machine has means for receiving pieces of fruit in accordance with a series of alignments of rollers mounted on conveyer chains, which rollers form a kind of special multiple receptacles, in the form of alignments designed to transfer the pieces of fruit to the containers or trays in a given loading zone. The containers run along a path which comprises a horizontal section in which there are the weighing cells associated with each of the conveyer chains, with means which permit the temporary positioning of each of the trays on the loading platform of the weighing units, without the need for the installation to stop, and possessing means for ensuring that the containers are subsequently guided in a vertical path, to pass subsequently above a series of collecting stations at which the containers will be unloaded in accordance with their precise weight in a manner controlled by a microprocessor for the purpose of ensuring that the total loadings of fruit onto each of the receiving stations correspond to the desired values.

The fruit-receiving containers or trays involve a supporting frame and the receptacle or container proper, disposed in the said frame, which is able to rest on the loading platform in the zone in which it passes over the latter. The frame carrying each of the containers or trays has arms on either side of the latter, along their longitudinal axis, for combination with guides fixed to the framework of the machine, for the purpose of permitting displacement of the various frames, while keeping the containers or trays horizontal.

The machine of the invention also makes provision for feeding on the basis of two roller feeders which feed four rows of containers associated in twos - it being possible for there to be one roller feeder for each row of containers according to products - which, in a synchronised manner, convey the fruits from the receiving hopper to a number of containers, the singling-out and spacing-out of the fruits taking place, during the said conveying operation, by means of a system which causes the rollers to rotate, in their translatory movement, more or less rapidly to the right or left in an automatic manner according to the diameter, shape, size and variety of the fruit.

The loading of the containers is carried out in the vertical section for the latter, in such a way that the roller feeders are able to vary their unloading point by moving it forwards or backwards in an automatic manner, with respect to one and the same container-loading position, as a function of the shape and size of the fruits.

The loading of the containers will be done in such a way that those which have emptied out their contents and are returning empty in pairs are fed again. In the event of one container in the pair formed by the said containers having failed to empty out its contents and returning in the occupied condition, on its passage through the loading point, the roller feeder would be arrested in order to prevent further loading onto the occupied container and onto the other container in the pair, in spite of the fact that it is free, and it will remain held back until the arrival of two new containers which form an empty pair.

The entire machine is able to vary its working speed in a manner which is synchronised with all its elements in an automatic manner as a function of the packing systems which depend upon the said machine.

The weighing system has as many electronic sensors (loading cells) as the machine has rows of trays, irrespective of the number of lines. These loading cells have a correcting system for positioning the weighing plate perfectly in the horizontal plane; the whole weighing system being insulated from the general structure by means of dampers, so as to avoid the transmission of vibrations, and a system for controlling the latter which processes them at the electronic level so that they do not distort the processing of data supplied by the loading cells.

For the sake of better understanding, there are attached, by way of an example, a number of explanatory drawings of a machine for the dynamic weighing of fruit, which machine is embodied in accordance with the present invention.

Figure 1 shows, diagrammatically, the disposition of main elements of the machine which is embodied in accordance with the present invention.

Figure 2 shows a view in side elevation in which the relative position of the fruit-conveying containers and the receiving stations can be seen.

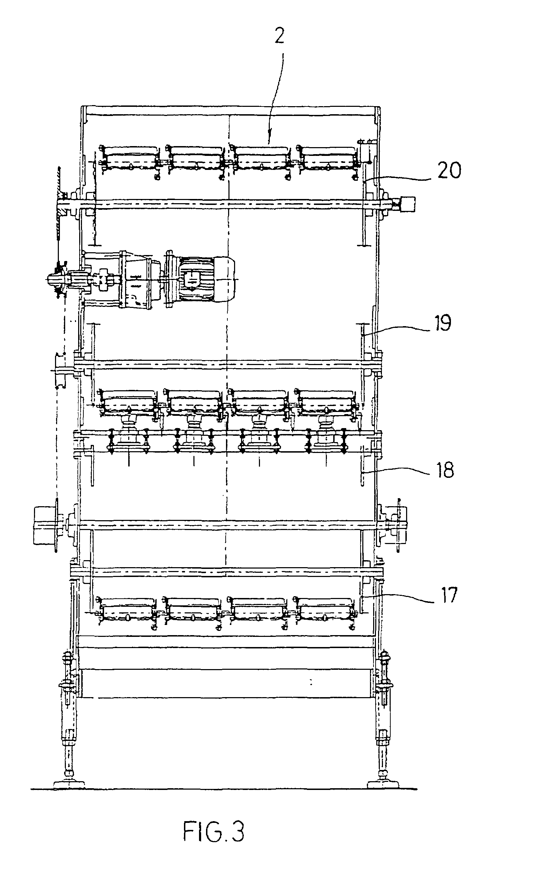

Figure 3 represents a view in front elevation of the same machine.

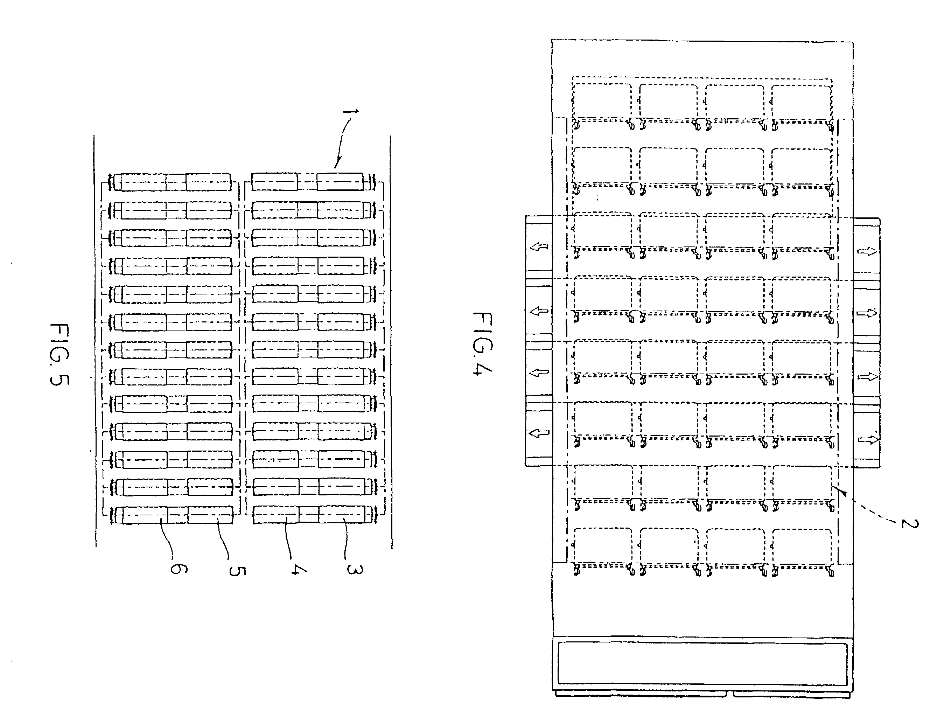

Figures 4 and 5 are plan views, in each case, of the unit comprising conveyer chains fitted with the various container-carrying framings, and of the fruit-feeding elements for filling the trays.

Figure 6 shows a detail representing the relative position of one of the carrier framings with respect to a weighing cell and with respect to one of the fixed guides on the machine.

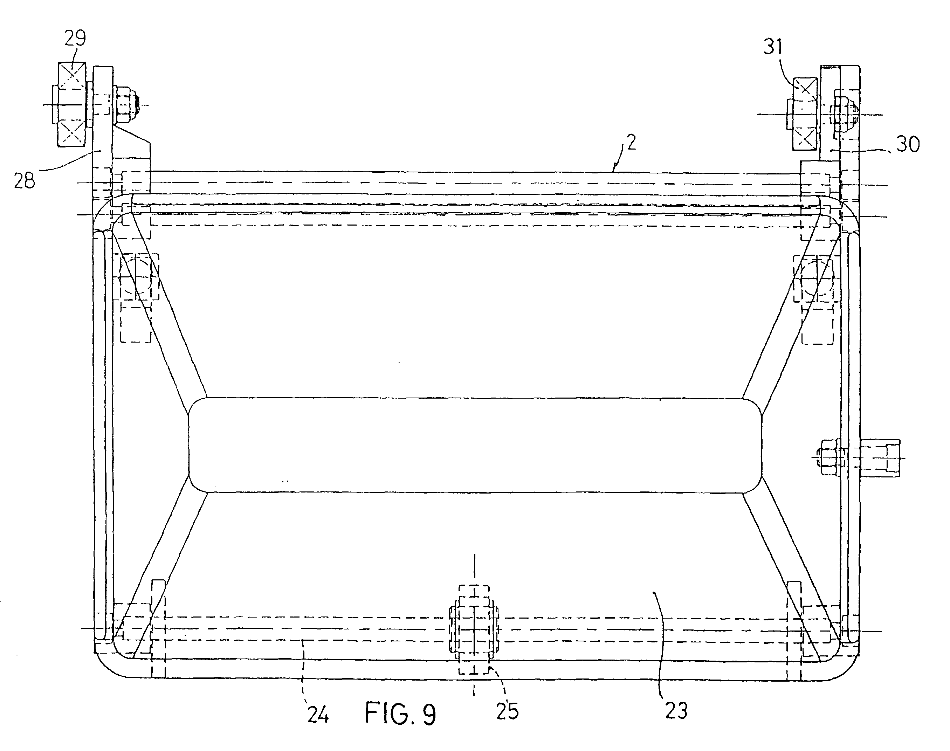

Figures 7, 8 and 9 are detailed views in each case, in side elevation, front elevation and plan respectively, of a framing carrying one of the containers or trays of the weighing machine.

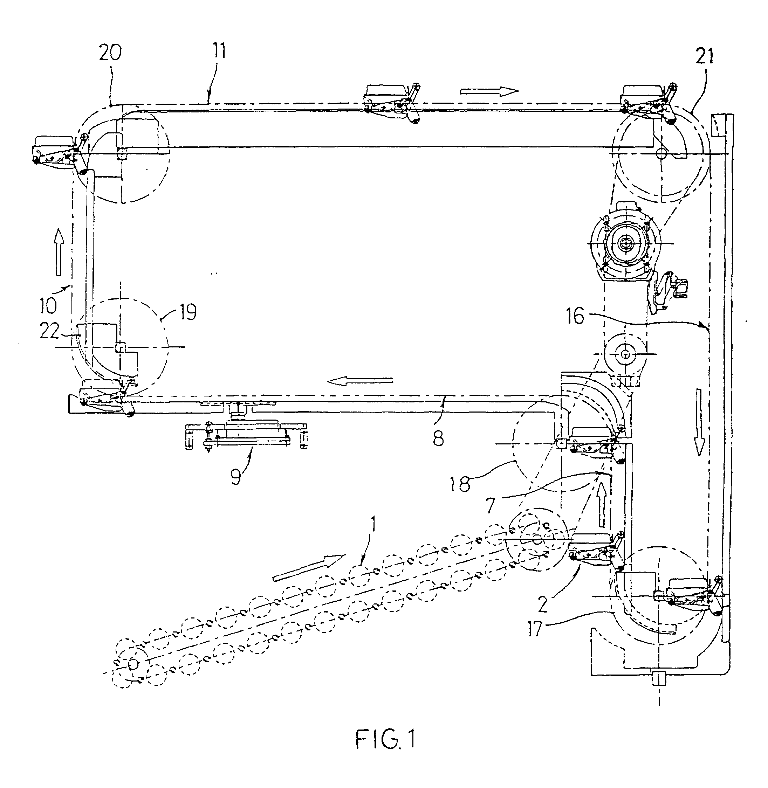

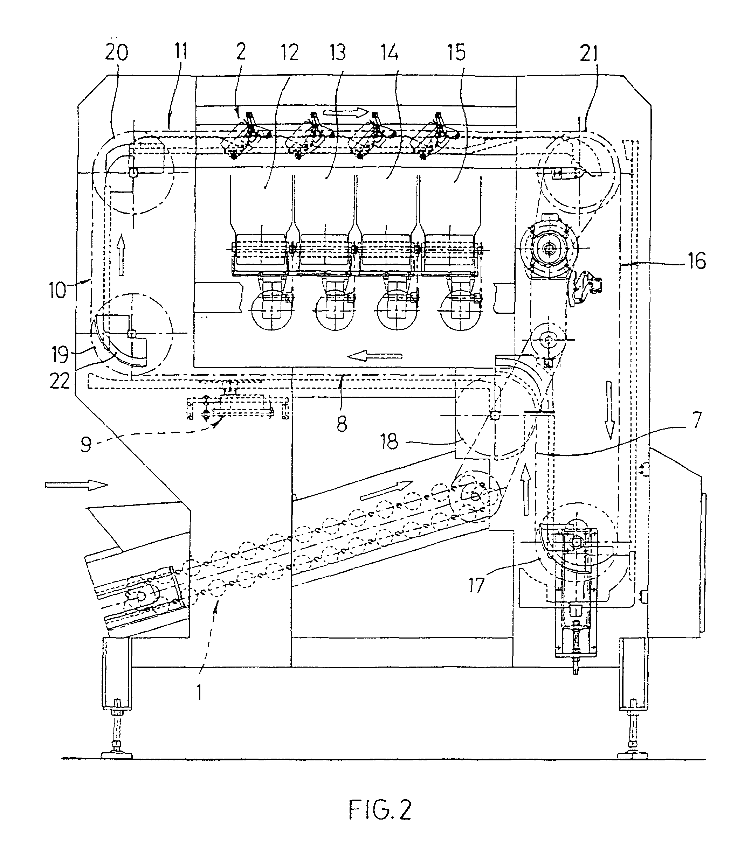

As represented in figures 1, 2 and 5, the pieces of fruit transported by the rollers -1- are conducted to the containers -2- of the machine by means of a series of inclined conveyer chains which are variable in number, four conveyer chains indicated by the numerals -3-, -4-, -5- and -6- having been represented in the example in the figures. The said conveyer chains will be driven by conventional displacing and synchronising organs which are not explained in detail. The individual containers are displaced in a complex path in the machine, in which it is possible to distinguish a first vertical section -7- for the loading of the pieces of fruit, a consecutive horizontal section -8- in which there are the weighing units -9-, one for each of the conveyer chains, and then a vertical transfer section -10- until the upper section -11- is reached, in which there is effected the unloading of the pieces of fruit into the various receiving units which transport the fruit to the packing units. In the case represented, these have been indicated by means of the numerals -12-, -13-, -14- and -15- in figure 2. The path of the machine comprises another vertical section - 16- for the return to the lower part for linking up with the rising vertical section -7-.

At all the zones in the circuit connecting the consecutive sections, the conveyer chains are guided on the respective wheels, such as those represented by means of the numerals -17-, -18-, -19-, -20- and -21-. The conveyer chains bring about the displacement of the containers or trays mounted in their respective framings, and there will be present, for guidance in said zones connecting the consecutive sections, fixed guides such as the one -22- represented in figure 1, which will make it possible, in combination with the rollers of the framings carrying the containers or trays, to maintain the latter in a horizontal disposition throughout their path until they arrive at the upper, unloading section in which the framings, in conjunction with their containers, will move in a sliding manner along a guide and, when the latter is interrupted, will rock so as to empty the load into the receiving units.

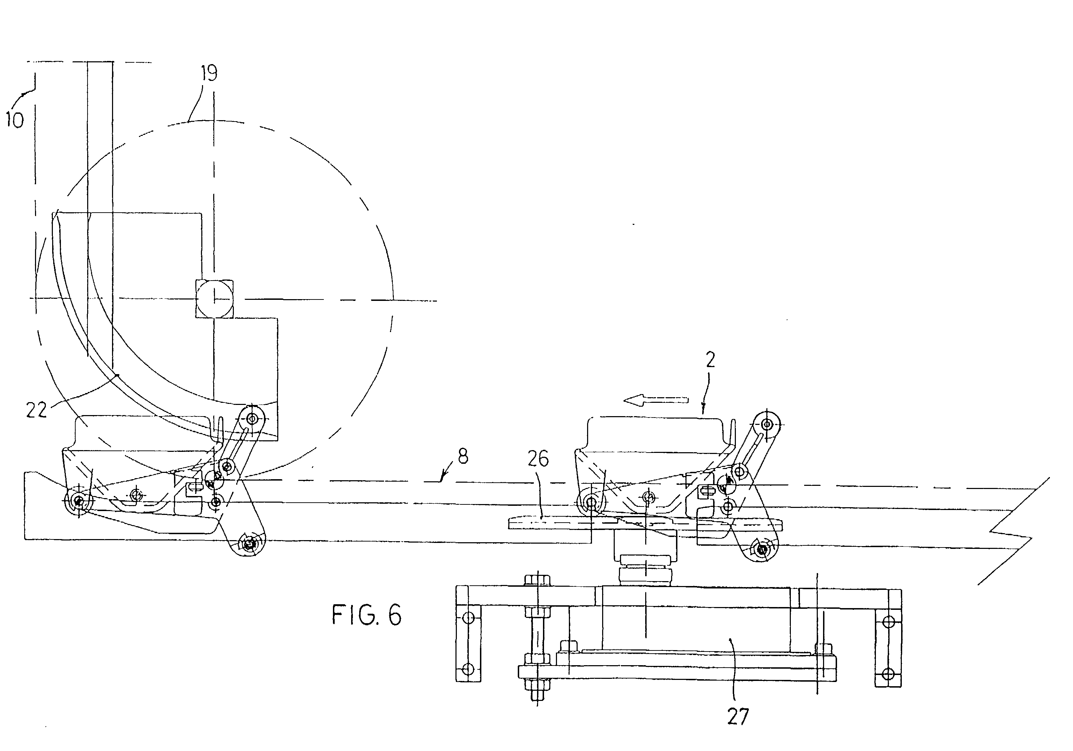

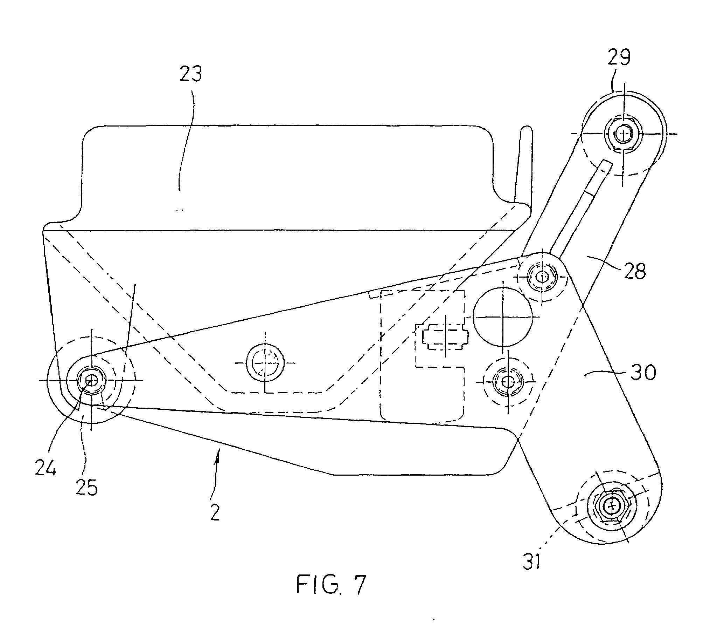

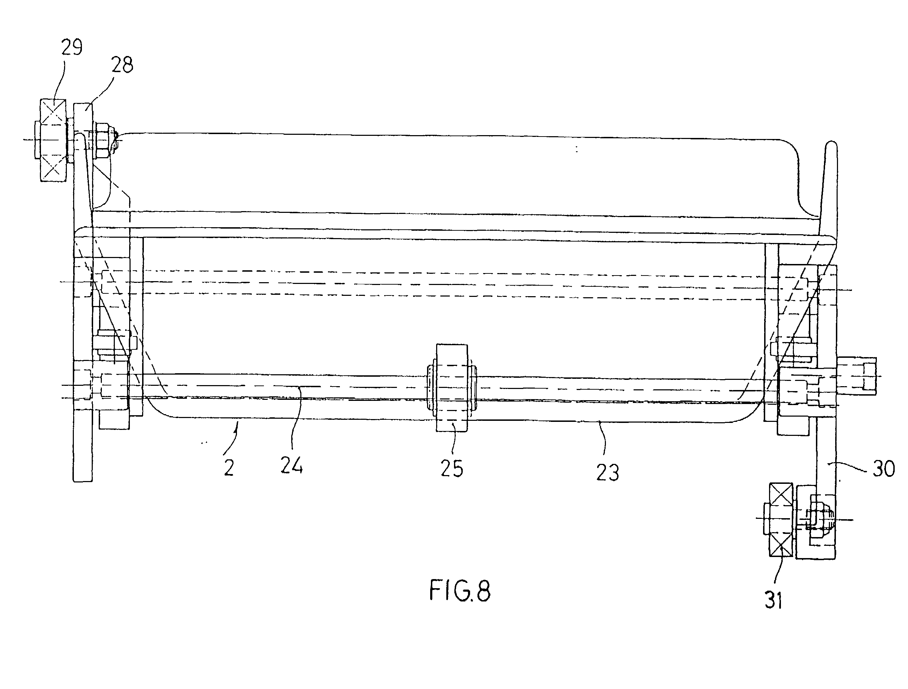

In accordance with the invention, one of the units -2- represented in figure 7 and constituted by the framing and the container, will comprise the container -23- fitted with a transverse pressure mounted spindle -24- with a roller -25- intended to rest on the weighing platform, as represented in figure 6 in which the said weighing platform has been designated by the numeral -26-, the said platform being connected to a loading cell -27-from which there will be transmitted voltage pulses generated by piezoelectric means so as to permit reading of the weighing operation. The frame carrying the tray -23- has an element -28- fitted with an ascending arm and an upper roller -29-, and another, outer element -30-which also carries the lower guide roller -31-. The said arms -28- and -30- are respectively incorporated in each of the ends of the framing, as has been represented in figure 8.

As will be observed, the unit constituted by the machine will permit, in a simple and reliable manner, the loading of the various alignments of framings with their trays, and also the dynamic weighing of the said trays on their passage through the loading cells zone, the various trays then being guided in their framings to the unloading zone so as to distribute the load constituted by the pieces of fruit into the various filling stations.

## Claims

1. System for the dynamic weighing of fruit comprising a plurality of conveyor chains, a plurality of frames for carrying a plurality of fruit containers (2), a plurality of weighing units (9) with a loading cell each, and a framework for supporting the chains **characterised in that** it comprises five consecutive sections being a first vertical section (7) for the load of the containers, a second horizontal section (8) containing the weighing units, a third vertical section (10), a fourth horizontal section (11) containing rocking means for the discriminate unload of the containers, and a fifth vertical section (16) linking up, at its end, with the first vertical section through wheels (17) ; the system having wheels in the zones connecting the consecutive sections and wherein each vertical section has a guide fixed to the framework for maintaining the containers with their open side facing upwards.

2. System for the dynamic weighing of fruit, according to claim 1, **characterised in that** guides **(22)** fixed to the framework of the machine, for the frames carrying the trays (23), are disposed in the zones connecting the consecutive sections **(7, 8, 10, 11, 16)** for the purpose of preventing tipping of the said trays (23).

3. System for the dynamic weighing of fruit, according to claim 1, **characterised in that** the frames carrying the containers comprise two pieces (28, 30) in a connected disposition, one of which (30) has an arm with a lower guide roller (31) and the other (28) a corresponding arm with an upper guide roller (29), the said pieces being disposed at opposite ends of the frame, and **in that** the frame supports the container **(2)** which is fitted by a transverse spindle **(24)** mounted under pressure, with a rotating roller **(25)** for contacting the loading platform of the weighing unit.

4. Method for the dynamic weighing of fruit, using the system according to a preceding claim, **characterised in that** the loading of the containers **(2)** is done in such a way that those which have emptied out their contents and are returning empty in pairs are fed again and, in the event of one container in the pair formed by the said containers **(2)** having failed to empty out its contents and returning in the occupied condition, on its passage through the loading point, the roller feeder **(1)** is arrested in order to prevent further loading onto the occupied container **(2)** and onto the other container of the pair, in spite of the fact that it is free, and it remains held back until the arrival of two new containers which form an empty pair.

## Patentansprüche

1. System zum dynamischen Wägen von Früchten, umfassend eine Mehrzahl von Transportketten, eine Mehrzahl von Rahmen, die mehrere Früchtebehälter (2) tragen, eine Mehrzahl von Wägeeinheiten (9) mit jeweils einer Lastzelle, und ein Rahmenwerk zum Haltern der Ketten, **dadurch gekennzeichnet, daß** es aufweist: fünf aufeinanderfolgende Abschnitte, bei denen es sich um einen ersten vertikalen Abschnitt (7) zum Beladen der Behälter, einen zweiten horizontalen Abschnitt, der die Wägeeinheiten enthält, einen dritten vertikalen Abschnitt (10), einen vierten horizontalen Abschnitt (12), der eine Schwingeinrichtung zum Erkennen des Entladens der Behälter, und einen fünften vertikalen Abschnitt (16) handelt, wobei letzterer an seinem Ende über Räder (17) an den ersten vertikalen Abschnitt anschließt, wobei das System Räder in den die aufeinanderfolgenden Abschnitte verbindenden Zonen besitzt, und wobei jeder vertikale Abschnitt eine Führung besitzt, die an dem Rahmenwerk fixiert ist, um die Behälter mit ihrer offenen Seite nach oben weisend zu halten.

2. System zum dynamischen Wägen von Früchten nach Anspruch 1, **dadurch gekennzeichnet, daß** an dem Rahmenwerk der Maschine fixierte Führungen (22) für die die Behälter (23) tragenden Rahmen in den Zonen angeordnet sind, welche die aufeinanderfolgenden Abschnitte (7, 8, 10, 11, 16) mit dem Zweck verbinden, ein Kippen der Behälter (23) zu verhindern.

3. System zum dynamischen Wägen von Früchten nach Anspruch 1, **dadurch gekennzeichnet, daß** der die Behälter tragende Rahmen zwei Stücke (28, 30) in miteinander verbundener Anordnung aufweist, von denen das eine (30) einen Arm mit einer unteren Führungsrolle (31) und das andere (28) einen entsprechenden Arm mit einer oberen Führungsrolle (29) besitzt, wobei die Stücke an einander abgewandten Enden des Rahmens angeordnet sind, und daß der Rahmen den Behälter (2) trägt, der von einer unter Druck gelagerten Querspindel (24) mit einer drehenden Rolle (25) zum Kontaktieren der Ladeplattform der Wägeeinheit ausgestattet ist.

4. Verfahren zum dynamischen Wägen von Früchten unter Verwendung des Systems nach einem vorhergehenden Anspruch, **dadurch gekennzeichnet, daß** das Beladen der Behälter (2) in der Weise geschieht, daß solche Behälter, die von ihrem Inhalt befreit sind und leer in Paaren zurückgeführt werden, erneut zugeführt werden, und für den Fall, daß ein Behälter in dem Paar der Behälter (2) seinen Inhalt nicht entleert hat und im belegten Zustand bei seinem Durchlauf durch den Ladepunkt zurückkehrt, der Rollenförderer (1) festgesetzt wird, um ein weiteres Beladen des belegten Behälters (2) und des weiteren Behälters des Paares zu verhindern, auch wenn dieser frei ist, außerdem zurückgehalten wird bis zur Ankunft zweier neuer Behälter, die ein leeres Paar bilden.

## Revendications

1. Système pour peser dynamiquement des fruits, comprenant une pluralité de chaînes transporteuses, une pluralité de supports destinés à supporter une pluralité de conteneurs de fruits (2), une pluralité de dispositifs de pesée (9) comportant chacun un capteur de force, et une ossature pour supporter les chaînes, **caractérisé en ce qu'**il comprend cinq sections successives, à savoir une première section verticale (7) permettant le chargement des conteneurs, une deuxième section horizontale (8) contenant les dispositifs de pesée, une troisième section verticale (10), une quatrième section horizontale (11) contenant des appareils à bascule permettant un déchargement différencié des conteneurs, et une cinquième section verticale (16) reliée, à son extrémité, à la première section verticale par l'intermédiaire de roues (17) ; le système comportant des roues dans les zones reliant les sections successives et dans lequel chaque section verticale possède un guide fixé sur l'ossature afin de maintenir les conteneurs côté ouvert vers le haut.

2. Système pour peser dynamiquement des fruits selon la revendication 1, **caractérisé en ce que** les guides (22) fixés à l'ossature de la machine, pour les supports supportant les plateaux (23), sont disposés dans les zones reliant les sections successives (7, 8, 10, 11, 16) afin d'éviter un renversement desdits plateaux (23).

3. Système pour peser dynamiquement des fruits selon la revendication 1, **caractérisé en ce que** les supports supportant les conteneurs comprennent deux pièces (28, 30) connectées l'une à l'autre, l'une (30) d'entre elles possède un bras pourvu d'un galet de guidage inférieur (31) et l'autre (28) possède un bras correspondant pourvu d'un galet de guidage supérieur (29), lesdites pièces étant disposées à des extrémités opposées du support, et **en ce que** le support supporte le conteneur (2) qui est fixé par une tige transversale (24) montée sous pression, avec un cylindre rotatif (25) destiné à toucher la palette du dispositif de pesée.

4. Procédé pour peser dynamiquement des fruits utilisant le système selon l'une des revendications précédentes, **caractérisé en ce que** le chargement des conteneurs (2) est effectué de telle manière que les conteneurs qui ont été vidés de leur contenu et qui reviennent vides par paires sont de nouveau alimentés et, dans le cas où un conteneur de la paire formée par lesdits conteneurs (2) n'a pas été correctement vidé de son contenu et revient rempli, lors de son passage par le point de chargement, le dispositif d'alimentation à rouleaux (1) est arrêté afin d'empêcher le chargement du conteneur (2) rempli ou de l'autre conteneur de la paire, bien que celui-ci soit vide, et il reste à l'arrêt jusqu'à l'arrivée de deux nouveaux conteneurs constituant une paire vide.
